# EUROPEAN PATENT APPLICATION

(11) **EP 4 564 496 A1**
(43) Date of publication of application: **04.06.2025**
(21) Application number: 23846709.6
(22) Date of filing: 28.07.2023
(51) Int. Cl.: H01M 10/04, H01M 10/0525, H01M 10/0585, H01M 50/46

(54) **METHOD FOR PRODUCING BATTERY**

(30) Priority: 28.07.2022 JP 2022120966
(71) Applicant: FUJIFILM Corporation, Tokyo 106-8620 (JP)
(72) Inventor: FUCHIGAMI, Yujiro, Minami-ashigara-shi, Kanagawa 250-0193 (JP)
(74) Representative: Meissner Bolte Partnerschaft mbB
(86) International application number: PCT/JP2023/027877
(87) International publication number: WO 2024/024979

(57) **Abstract**

According to one embodiment of the present invention, there is provided a method of manufacturing a battery, the method including: preparing a first electrode member that includes a first collector and a first layer including a first active material; preparing a second electrode member that includes a second collector and a second layer including a second active material; covering the first layer of the first electrode member with a separator; fixing the separator that covers the first layer of the first electrode member; directing the separator to the second electrode member by turning the first electrode member and the separator while the separator that covers the first layer of the first electrode member is fixed; and laminating the separator directed to the second electrode member and the second electrode member to form a structure including the first collector, the first layer, the separator, the second layer, and the second collector in this order.

## Description

### BACKGROUND OF THE INVENTION

### 1. Field of the Invention

The present disclosure relates to a method of manufacturing a battery.

### 2. Description of the Related Art

For example, a lithium ion battery has a multilayer structure including a positive electrode, a negative electrode, and a separator sandwiched between the positive electrode and the negative electrode. From the viewpoint of increasing the capacity of the battery, a laminated battery that is manufactured by laminating a plurality of components has attracted attention.

For example, WO2015/162746A discloses a method of manufacturing a battery laminate. In a method of manufacturing the battery laminate disclosed in WO2015/162746A, by laminating a positive electrode sheet, the separator, and a negative electrode sheet, the separator is provided between the positive electrode sheet and the negative electrode sheet. The positive electrode sheet is manufactured by applying a positive electrode active agent to both surfaces of a positive electrode collector, and the positive electrode active agent includes a component such as a positive electrode active material. The negative electrode sheet is manufactured by applying a negative electrode active agent to both surfaces of a negative electrode collector, and the negative electrode active agent includes a component such as a negative electrode active material.

### SUMMARY OF THE INVENTION

However, in the method of manufacturing a battery in the related art disclosed in WO2015/162746A, that is, in the method of manufacturing a battery including forming an active material-containing layer on both surfaces of a collector, the active material-containing layer may collapse before or in the middle of laminating the positive electrode, the separator, and the negative electrode depending on manufacturing conditions. For example, among the active material-containing layers formed on both of the surfaces of the collector, an active material-containing layer that is directed in the direction of gravitational force without being supported by an object such as the collector is likely to collapse. Further, as the thickness of the active material-containing layer increases or as the active material-containing layer is embrittled due to the effect of a material, the collapse of the active material-containing layer is likely to occur. Under the above-described circumstances, in a method of manufacturing a battery, a method of forming a positive electrode-separator-negative electrode structure while preventing collapse of an active material-containing layer is required.

An object to be achieved by one embodiment of the present disclosure is to provide a method of manufacturing a battery in which collapse of an active material-containing layer in the process of manufacturing a battery can be prevented.

The present disclosure includes the following aspects.
<1> A method of manufacturing a battery, the method including: preparing a first electrode member that includes a first collector and a first layer including a first active material; preparing a second electrode member that includes a second collector and a second layer including a second active material; covering the first layer of the first electrode member with a separator; fixing the separator that covers the first layer of the first electrode member; directing the separator to the second electrode member by turning the first electrode member and the separator while the separator that covers the first layer of the first electrode member is fixed; and laminating the separator directed to the second electrode member and the second electrode member to form a structure including the first collector, the first layer, the separator, the second layer, and the second collector in this order.
<2> The method of manufacturing a battery according to <1>,
   in which the fixing of the separator includes fixing an outer edge portion of the separator on a side outside of an outer peripheral surface of the first layer of the first electrode member.
<3> The method of manufacturing a battery according to <1> or <2>,
   in which the fixing of the separator includes fixing an outer edge portion of the separator at two or more fixing positions.
<4> The method of manufacturing a battery according to <3>,
   in which in a plan view, a center of the first electrode member matches with a center of the two or more fixing positions.
<5> The method of manufacturing a battery according to any one of <1> to <4>,
   in which the fixing of the separator includes adsorbing an outer edge portion of the separator to an adsorption device.
<6> The method of manufacturing a battery according to any one of <1> to <4>,
   in which the fixing of the separator includes pressing an outer edge portion of the separator using a fixing tool.
<7> The method of manufacturing a battery according to <6>,
   in which in the fixing of the separator, an interval L between an outer peripheral surface of the first layer of the first electrode member and the fixing tool and a thickness H of the first layer of the first electrode member satisfy a relationship of L > (H/10).
<8> The method of manufacturing a battery according to any one of <1> to <7>,
   in which in the fixing of the separator, a deformation amount of a thickness of the first layer of the first electrode member is 1/50 or less the thickness of the first layer of the first electrode member immediately before fixing the separator.
<9> The method of manufacturing a battery according to any one of <1> to <8>,
   in which a temperature in the process from the preparation of each of the first electrode member and the second electrode member to the lamination of the separator and the second electrode member is 20°C or lower.
<10> The method of manufacturing a battery according to any one of <1> to <9>,
   in which a ratio of a thickness of the first layer of the first electrode member after laminating the first electrode member on the second electrode member to a thickness of the first layer of the first electrode member immediately before laminating the first electrode member on the second electrode member is 0.9 to 1.
<11> The method of manufacturing a battery according to any one of <1> to <10>,
   in which the first electrode member is a positive electrode member, and the second electrode member is a negative electrode member.
<12> The method of manufacturing a battery according to any one of <1> to <10>,
   in which the first electrode member is a negative electrode member, and the second electrode member is a positive electrode member.

According to the embodiment of the present disclosure, the method of manufacturing a battery in which collapse of an active material-containing layer in the process of manufacturing a battery can be prevented.

### BRIEF DESCRIPTION OF THE DRAWINGS

Figs. 1A to 1D are schematic diagrams showing a method of manufacturing a battery according to one embodiment.
Fig. 2 is a schematic diagram showing a separator that is fixed using an adsorption device in the method of manufacturing a battery according to the embodiment.
Fig. 3 is a schematic diagram showing a separator that is fixed using a fixing tool in the method of manufacturing a battery according to the embodiment.
Fig. 4 is a schematic diagram showing a turning step and a laminating step in the method of manufacturing a battery according to the embodiment.

### DESCRIPTION OF THE PREFERRED EMBODIMENTS

Hereinafter, embodiments of the present disclosure will be described. The present disclosure is not limited to the following embodiments, and modifications can be made as appropriate within the desired range of the present disclosure. In a case where an embodiment of the present disclosure is described with reference to the drawings, the description of the same components and the same reference numerals in the drawings will not be repeated. In each of the drawings, components represented by the same reference numerals are the same components. In the drawings, ratios between dimensions do not necessarily represent the actual ratios between the dimensions.

In the present disclosure, a range of numerical values described using "to" means a range including the numerical values listed before and after "to" as the lower limit value and the upper limit value. Regarding numerical ranges that are described stepwise in the present disclosure, an upper limit value described in a numerical value may be replaced with an upper limit value of another stepwise numerical range, and a lower limit value described in a numerical value may be replaced with a lower limit value of another stepwise numerical range. In addition, regarding a stepwise numerical range described in the present disclosure, an upper limit value or a lower limit value described in a numerical value may be replaced with a value described in Examples.

In the present disclosure, the term "step" includes not only an independent step but also a step that cannot be clearly distinguished from other steps in a case where a desired object is achieved.

In the present disclosure, in a case where a plurality of materials corresponding to each of components in a composition are present, the amount of the component in the composition represents the total amount of the materials corresponding to the component unless specified otherwise.

In the present disclosure, "% by mass" and "% by weight" have the same meaning, and "part(s) by mass" and "part(s) by weight" have the same meaning.

In the present disclosure, a combination of two or more preferable aspects is a more preferable aspect.

In the present disclosure, the ordinal numerals (for example, "the first" and "the second") are terms used to distinguish elements and do not limit the number of elements and the superiority or inferiority of elements.

### <Method of Manufacturing Battery>

Hereinafter, a method of manufacturing a battery according to the present disclosure will be described. In one embodiment of the present disclosure, a method of manufacturing a battery includes (1) to (6) below:
(1) preparing a first electrode member that includes a first collector and a first layer including a first active material (hereinafter, also referred to as "first preparation step");
(2) preparing a second electrode member that includes a second collector and a second layer including a second active material (hereinafter, also referred to as "second preparation step");
(3) covering the first layer of the first electrode member with a separator (hereinafter, also referred to as "coating step");
(4) fixing the separator that covers the first layer of the first electrode member (hereinafter, also referred to as "fixing step");
(5) directing the separator to the second electrode member by turning the first electrode member and the separator while the separator that covers the first layer of the first electrode member is fixed (hereinafter, also referred to as "turning step"); and
(6) laminating the separator directed to the second electrode member and the second electrode member to form a structure including the first collector, the first layer, the separator, the second layer, and the second collector in this order (hereinafter, also referred to as "laminating step").

According to the above-described embodiment, a method of manufacturing a battery in which collapse of an active material-containing layer in the process of manufacturing a battery can be prevented. The reason why the above-described method can prevent the collapse of the active material-containing layer is presumed as follows. In the method of manufacturing a battery according to the embodiment of the present disclosure, the first layer including the first active material is covered with the separator, and the separator that covers the first layer is turned while being fixed. As a result, the structure that includes the first collector, the first layer, the separator, the second layer, and the second collector in this order is formed. Since the first layer is protected by the separator as described above, the collapse of the first layer caused by manufacturing conditions such as a position, a thickness, and a material can be prevented. In particular, the collapse of the first layer in the turning step is prevented. In a case where the collapse of the first layer in the turning step is prevented, collapse of the second layer caused by the collapsed first layer coming into contact with the second layer is prevented. Further, since the first layer is protected by the separator, the first electrode member, the separator, and the second electrode member can be laminated in a stable state where the collapse of the second layer is not likely to occur. For example, the separator and the first electrode member can be laminated on the second layer in the stable state where the second layer is supported by the second collector. Accordingly, according to the embodiment of the present disclosure, the method of manufacturing a battery in which collapse of an active material-containing layer in the process of manufacturing a battery can be prevented.

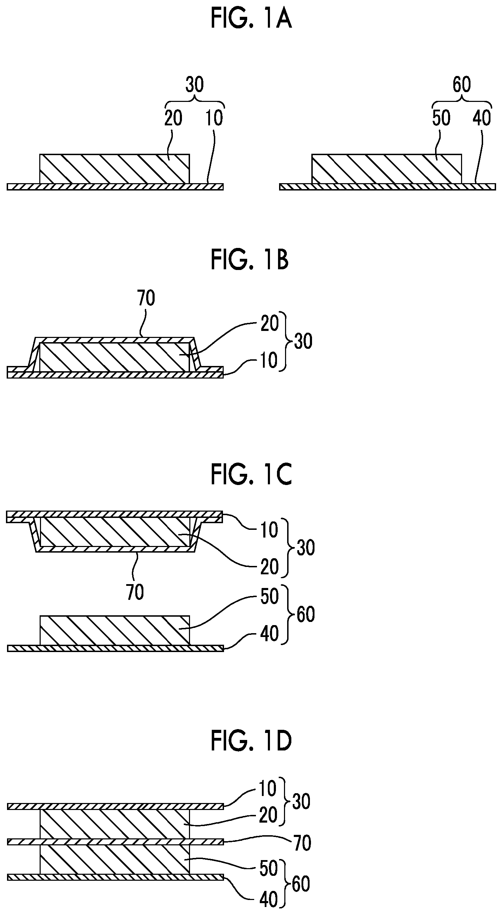

Before specifically describing each of the steps, an example of the method of manufacturing a battery will be described. Figs. 1A to 1D are schematic diagrams showing a method of manufacturing a battery according to one embodiment. Note that the method of manufacturing a battery according to the present disclosure is not limited to the embodiment shown in Figs. 1A to 1D.

Fig. 1A shows the first preparation step and the second preparation step. As shown in Fig. 1A, each of a first electrode member 30 and a second electrode member 60 is prepared. The first electrode member 30 includes a first collector 10 and a first layer 20 including a first active material. The second electrode member 60 includes a second collector 40 and a second layer 50 including a second active material.

Fig. 1B shows the coating step and the fixing step. As shown in Fig. 1B, the first layer 20 of the first electrode member 30 is covered with a separator 70, and the separator 70 that covers the first layer 20 of the first electrode member 30 is fixed. The fixing of the separator 70 maintains the state of the separator 70 that covers the first layer 20 of the first electrode member 30, and prevents the collapse of the first layer 20. Regarding the details of fixing positions in Fig. 1B, an outer edge portion of the separator 70 is fixed on a side outside of an outer peripheral surface of the first layer 20 of the first electrode member 30.

Fig. 1C shows the turning step. As shown in Fig. 1C, the separator 70 is directed to the second electrode member 60 by turning the first electrode member 30 and the separator 70 while the separator 70 that covers the first layer 20 of the first electrode member 30 is fixed. The separator 70 faces the second layer 50 of the second electrode member 60. In the turning step, the state of the separator 70 that covers the first layer 20 of the first electrode member 30 without being separated from the first electrode member 30 is maintained, and thus the collapse of the first layer 20 is prevented. For example, even in a case where the first layer 20 is directed in the direction of gravitational force in the turning step, the collapse of the first layer 20 is prevented by the separator 70.

Fig. 1D shows the laminating step. As shown in Fig. 1D, the separator 70 directed to the second electrode member 60 and the second electrode member 60 are laminated to form a structure including the first electrode member 30, the separator 70, and the second electrode member 60. Specifically, the structure that includes the first collector 10, the first layer 20 including the first active material, the separator 70, the second layer 50 including the second active material, and the second collector 40 in this order is formed.

### [First Preparation Step]

The first preparation step is preparing the first electrode member that includes the first collector and the first layer including the first active material.

The first collector may be selected from well-known collectors used for manufacturing a battery. Examples of the first collector include a positive electrode collector and a negative electrode collector.

Examples of the positive electrode collector include aluminum, an aluminum alloy, stainless steel, nickel, and titanium. The positive electrode collector is preferably aluminum or an aluminum alloy. The structure of the positive electrode collector may be a monolayer structure or a multilayer structure. The positive electrode collector is also preferably aluminum or stainless steel including a coating layer. It is preferable that the coating layer includes carbon, nickel, titanium, or silver.

Examples of the negative electrode collector include aluminum, copper, a copper alloy, stainless steel, nickel, and titanium. The negative electrode collector is preferably aluminum, copper, a copper alloy, or stainless steel and more preferably copper or a copper alloy. The structure of the negative electrode collector may be a monolayer structure or a multilayer structure. The negative electrode collector is also preferably aluminum, copper, a copper alloy, or stainless steel including a coating layer. It is preferable that the coating layer includes carbon, nickel, titanium, or silver.

The first active material may be selected from well-known active materials used for manufacturing a battery. Examples of the first active material include a positive electrode active material and a negative electrode active material.

Examples of the positive electrode active material include a lithium-containing compound. Examples of the lithium-containing compound include a lithium-containing metal oxide. Examples of the lithium-containing metal oxide include a lithium-containing transition metal oxide. Examples of the lithium-containing metal oxide include a lithium-containing transition metal phosphate. Examples of the transition metal include Co, Ni, Fe, Mn, Cu, and V.

Examples of the positive electrode active material include a compound represented by LiMO₂. M includes at least a transition element belonging to the fourth period. M may include a non-transition element (for example, Al, Ca, Mg, and Zr). Examples of LiMO₂ include LiCoO₂, Mg-doped LiCoO₂, LiNiO₂, Li(Ni,Co,Al)O₂ (known as "NCA"), and Li(Ni,Mn,Co)O₂ (known as "NMC").

Examples of the positive electrode active material include LiMn₂O₄.

Examples of the positive electrode active material include a compound represented by LiMPO₄. M includes at least one selected from the group consisting of Mn, Fe, Co, and Ni.

Examples of the positive electrode active material include a compound represented by (Li₁₋ₓZₓ)MPO₄. M includes at least one selected from the group consisting of V, Cr, Mn, Fe, Co, and Ni. Z includes at least one selected from the group consisting of Ti, Zr, Nb, Al, and Mg. x represents 0.005 to 0.05.

Examples of the positive electrode active material include a partially fluorinated compound such as LiVPO₄F.

Examples of the positive electrode active material include fluorocarbon.

Examples of the positive electrode active material include a metal fluoride compound. Examples of the metal fluoride compound include a metal fluoride compound represented by MF₂ and a metal fluoride compound represented by MF₃. M includes Fe, Bi, Ni, Co, Ti, or V.

Examples of the positive electrode active material include vanadium oxide.

Examples of the negative electrode active material include lithium metal, carbon, lithium-intercalated carbon, lithium nitride, a lithium alloy, silicon, bismuth, boron, gallium, indium, zinc, tin, tin oxide, antimony, aluminum, titanium oxide, molybdenum, germanium, manganese, niobium, vanadium, tantalum, gold, platinum, iron, copper, chromium, nickel, cobalt, zirconium, yttrium, molybdenum oxide, germanium oxide, silicon oxide, and silicon carbide.

The first layer may further include other components. The first layer may include a carbonaceous material. Examples of the carbonaceous material include graphite, carbon powder, pyrolytic carbon, carbon black, carbon fibers, carbon micro fibers, carbon nanotubes, fullerene, and a graphene sheet. The carbonaceous material may be used as a conductive material. The first layer may include an electrolyte. Examples of the electrolyte include a lithium salt compound. Examples of the lithium salt compound include lithium hexafluorophosphate (LiPF₆). The first layer may include a solvent. Examples of the solvent include an organic solvent. Examples of the solvent include a carbonate compound. Examples of the carbonate compound include a chain-like carbonate compound and a cyclic carbonate compound. Examples of the chain-like carbonate compound include ethyl methyl carbonate, dimethyl carbonate, and diethyl carbonate. Examples of the cyclic carbonate compound include ethylene carbonate and propylene carbonate.

Examples of the first electrode member include a positive electrode member and a negative electrode member. The type of the first electrode member may be determined in consideration of the type of the second electrode member. The first electrode member may be a positive electrode member, and the second electrode member may be a negative electrode member. The first electrode member may be a negative electrode member, and the second electrode member may be a positive electrode member.

As long as the target first electrode member is obtained, a method of manufacturing the first electrode member is not limited. For example, the method of manufacturing the first electrode member includes forming the first layer including the first active material on the first collector. For example, the first layer including the first active material is formed on the first collector by supplying a first composition including the first active material thereto. For example, the first composition is manufactured by mixing the first active material and optionally other components. Raw materials of the first composition may be mixed using a mixing device. The mixing device may be selected from well-known mixing devices. Examples of the mixing device include a ball mill, a beads mill, a planetary mixer, a blade mixer, a roll mill, a kneader, and a disc mill. The first composition may be supplied using a supply device. The supply device may be selected from well-known supply devices. Examples of the supply device include a screw feeder, a disc feeder, a rotary feeder, and a belt feeder.

### [Second Preparation Step]

The second preparation step is preparing the second electrode member that includes the second collector and the second layer including the second active material.

The second preparation step may be performed before the first preparation step. The second preparation step may be performed after the first preparation step. The second preparation step may be performed in parallel with the first preparation step.

The second collector may be selected from well-known collectors used for manufacturing a battery. Examples of the second collector include the collectors described in "First Preparation Step" above.

The second active material may be selected from well-known active materials used for manufacturing a battery. Examples of the second active material include the active materials described in "First Preparation Step" above.

The second layer may further include other components. Examples of the other components include the other components described in "First Preparation Step" above.

Examples of the second electrode member include a positive electrode member and a negative electrode member. The type of the second electrode member may be determined in consideration of the type of the first electrode member. The first electrode member may be a positive electrode member, and the second electrode member may be a negative electrode member. The first electrode member may be a negative electrode member, and the second electrode member may be a positive electrode member.

As long as the target second electrode member is obtained, a method of manufacturing the second electrode member is not limited. For example, the second electrode member is manufactured using a method equivalent to the above-described method of manufacturing the first electrode member.

### [Coating Step]

The coating step is covering the first layer of the first electrode member with the separator.

The separator may be selected from well-known separators used for manufacturing a battery. Examples of the separator include a solid or gel ionic conductor. Examples of the separator include a microporous membrane and nonwoven fabric. Examples of the microporous membrane include a polyolefin microporous membrane. Examples of the polyolefin include polyethylene and polypropylene. The microporous membrane may be a microporous membrane including a liquid electrolyte. The structure of the separator may be a monolayer structure or a multilayer structure. The separator may be a separator including a polyethylene layer, a polypropylene layer, and a polyethylene layer in this order. The separator may be a separator including a polyolefin microporous membrane and nonwoven fabric in this order.

The coating step may include covering the first collector of the first electrode member in addition to the first layer of the first electrode member. The coating step may include covering the first electrode member.

### [Fixing Step]

The fixing step is fixing the separator that covers the first layer of the first electrode member.

In the present disclosure, "fixing the separator that covers the first layer of the first electrode member" refers to maintaining the state of the separator that covers the first layer of the first electrode member. In the present disclosure, "fixing the separator" includes "permanently fixing the separator" and "temporarily fixing the separator".

The fixing positions may be determined in consideration of the dimension of the first collector, the material of the first layer, the dimension of the first layer, and the dimension of the separator. It is preferable that the fixing step includes fixing the outer edge portion of the separator on the side outside of the outer peripheral surface of the first layer of the first electrode member. Further, it is preferable that the fixing step includes fixing the outer edge portion of the separator on the side outside of the outer peripheral surface of the first electrode member. The above-described method can minimize a force applied to an end part of the first layer and can prevent or reduce collapse and deformation of the first layer.

The number of the fixing positions may be determined in consideration of the dimension of the first collector, the material of the first layer, the dimension of the first layer, and the dimension of the separator. It is preferable that the fixing step includes fixing the separator at two or more fixing positions. Further, it is preferable that the fixing step includes fixing the outer edge portion of the separator at two or more fixing positions. The above-described method can improve the fixing properties of the separator and can prevent or reduce the collapse of the first layer. The number of the fixing positions is preferably four or more.

In a case where the number of the fixing positions is two or more, it is preferable that, in a plan view, a distance between a center of the first electrode member and a center of the two or more fixing positions is adjusted to be in the following range. In a case where a length of the first electrode member in a lateral direction of the first electrode member is represented by D, in a plan view, the distance between a center of the first electrode member and the center of the two or more fixing positions is preferably 0 mm to D/3 mm and more preferably 0 mm to D/5 mm. Further, it is preferable that, in a plan view, the center of the first electrode member and the center of the two or more fixing positions match with each other. In other words, in a plan view, the distance between the center of the first electrode member and the center of the two or more fixing positions is preferably 0 mm. The above-described method can prevent or reduce collapse and deformation of the first layer. In the present disclosure, "the center of the two or more fixing positions" refers to one point having the same distance from all of the two or more fixing positions.

A method of fixing the separator is not limited. The separator may be fixed using a mechanical method, a physical method, or a chemical method. The separator may be fixed using an adsorption device. For example, the adsorption device can fix the separator by adsorption. The separator may be fixed using a fixing tool. For example, the fixing tool can fix the separator by pressing the separator. For example, the fixing tool can fix the separator by sandwiching the separator. The separator may be fixed using a heat sealer. For example, the heat sealer can fix the separator by thermocompression bonding.

It is preferable that the fixing step includes adsorbing the separator to the adsorption device. Further, it is preferable that the fixing step includes adsorbing the outer edge portion of the separator to the adsorption device. Regarding the position of the adsorption device, it is preferable that the adsorption device faces the first collector of the first electrode member. **In** a case where the adsorption device faces the first collector of the first electrode member, the adsorption device, the first electrode member, and the separator are positioned in this order. The above-described position of the adsorption device improves the fixing properties of the separator. It is preferable that the adsorption device is a vacuum adsorption device. The vacuum adsorption device is a device that generates a negative pressure to adsorb an object. The adsorption device may have a function of supporting the electrode member. The adsorption device may have a function of transporting the electrode member. The adsorption device may have a temperature adjustment function.

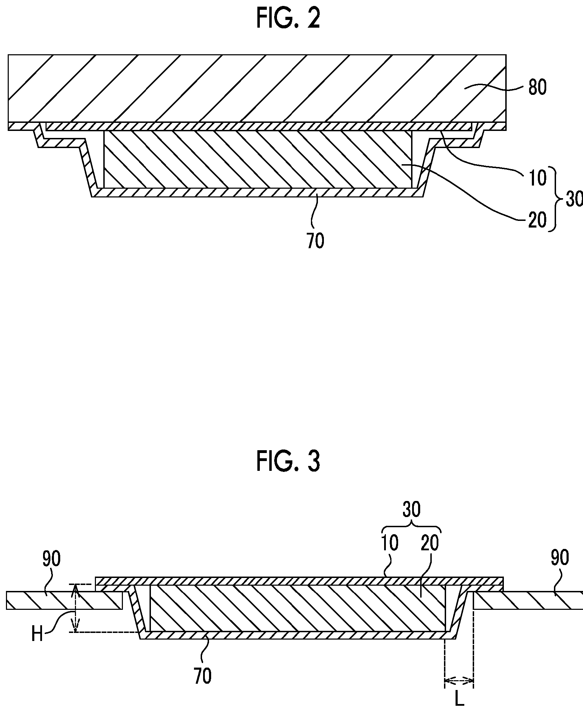

An example of the method using the adsorption device will be described with reference to Fig. 2. Fig. 2 is a schematic diagram showing the separator that is fixed using the adsorption device in the method of manufacturing a battery according to the embodiment. Note that the method using the adsorption device is not limited to the embodiment shown in Fig. 2. As shown in Fig. 2, an adsorption device 80 adsorbs the outer edge portion of the separator 70 on the side outside of the outer peripheral surface of the first electrode member 30. The fixing positions are contact sites between the separator 70 and the adsorption device 80. The adsorption device 80 also adsorbs the first electrode member 30 including the first collector 10 and the first layer 20.

It is preferable that the fixing step includes pressing the separator using a fixing tool. Further, it is preferable that the fixing step includes pressing the outer edge portion of the separator using the fixing tool. Pressing the separator using the fixing tool may include sandwiching the separator (preferably the outer edge portion of the separator) and the first electrode member (preferably the first collector). Pressing the separator using the fixing tool may include sandwiching the separator (preferably the outer edge portion of the separator) and a support that supports the first electrode member. Pressing the separator using the fixing tool may include sandwiching the separator (preferably the outer edge portion of the separator), the first electrode member (preferably the first collector), and a support that supports the first electrode member. Examples of the fixing tool include an electric gripper and an air gripper. The support may have a function of transporting the electrode member. The support may have a temperature adjustment function. Examples of the support include a cylindrical article such as a roller. Examples of the support include a belt-shaped article such as a belt. Examples of the support include a plate-shaped article such as a plate.

In the fixing step, it is preferable that the fixing tool is not in contact with the outer peripheral surface of the first layer of the first electrode member. In other words, it is preferable that the fixing tool is separated from the outer peripheral surface of the first layer of the first electrode member. For example, in the fixing step, it is preferable that an interval L between an outer peripheral surface of the first layer of the first electrode member and the fixing tool and a thickness H of the first layer of the first electrode member satisfy a relationship of L > (H/10). L and H may satisfy a relationship of L > (H/5). L and H may satisfy a relationship of L > H. The above-described method can prevent the fixing tool from excessively approaching the first layer of the first electrode member, and can minimize the effect of the fixing tool on the first layer of the first electrode member. As a result, the above-described method can prevent or reduce the collapse and the deformation of the first layer of the first electrode member. In the present disclosure, "the interval between the outer peripheral surface of the first layer and the fixing tool" refers to the shortest distance between the outer peripheral surface of the first layer and the surface of the fixing tool. Note that, in a case where a plurality of fixing tools are used, "the interval L between the outer peripheral surface of the first layer and the fixing tool" is represented by an arithmetic mean of the above-described shortest distances measured for the fixing tools. In the present disclosure, "the thickness of the first layer" is represented by an arithmetic mean of the thicknesses measured at nine positions.

One example of the method using the fixing tool will be described with reference to Fig. 3. Fig. 3 is a schematic diagram showing the separator that is fixed using the fixing tool in the method of manufacturing a battery according to the embodiment. Note that the method using the fixing tool is not limited to the embodiment shown in Fig. 3. As shown in Fig. 3, a fixing tool 90 presses the outer edge portion of the separator 70 on the side outside of the outer peripheral surface of the first layer 20 of the first electrode member 30. In Fig. 3, L represents the interval between the outer peripheral surface of the first layer 20 of the first electrode member 30 and the fixing tool 90. In Fig. 3, H represents the thickness of the first layer 20 of the first electrode member 30.

In the fixing step, a deformation amount of the thickness of the first layer of the first electrode member is preferably small. For example, in the fixing step, the deformation amount of the thickness of the first layer of the first electrode member is preferably 1/40 or less the thickness of the first layer of the first electrode member immediately before fixing the separator. Further, the deformation amount of the thickness of the first layer of the first electrode member is preferably 1/50 or less the thickness of the first layer of the first electrode member immediately before fixing the separator. The above-described method can prevent deterioration of battery performance and short-circuit. The deformation amount of the thickness of the first layer of the first electrode member in the fixing step is calculated by the following expression. "||" represents an absolute value.

Expression: Deformation Amount = |[Thickness of First Layer of First Electrode Member Immediately Before Fixing Separator] - [Thickness of First Layer of First Electrode Member Immediately After Fixing Separator]|

### [Turning Step]

The turning step is directing the separator to the second electrode member by turning the first electrode member and the separator while the separator that covers the first layer of the first electrode member is fixed. The separator faces the second electrode member in the turning step. It is preferable that the turning step includes directing the separator to the second layer of the second electrode member.

The turning of the first electrode member and the separator along with the fixing of the separator can prevent the collapse of the active material-containing layer. Further, in the turning step, even in a case where the thickness of the active material-containing layer is large or the active material-containing layer is embrittled due to the effect of the material, the collapse of the active material-containing layer is not likely to occur.

In the present disclosure, "turning the first electrode member and the separator" refers to changing the positions and the directions of the first electrode member and the separator. A method of changing the positions and the directions of the first electrode member and the separator is not limited. The turning step may include rotating the first electrode member and the separator. That is, the separator may be directed to the second electrode member by rotating the first electrode member and the separator. The turning step may include changing transport directions of the first electrode member and the separator. That is, the separator may be directed to the second electrode member by changing the transport directions of the first electrode member and the separator. The transport direction may be changed using a well-known transport device. Examples of a device that can change the transport direction include a roller and a conveyor. For example, the roller can change the transport direction by transporting the first electrode member and the separator along an outer peripheral surface of the roller.

### [Laminating Step]

The laminating step is laminating the separator directed to the second electrode member and the second electrode member to form a structure including the first collector, the first layer, the separator, the second layer, and the second collector in this order.

A method laminating the separator and the second electrode member is not limited. The separator may approach the second electrode member. The second electrode member may approach the separator. The separator and the second electrode member may approach each other.

In the laminating step, unless the fixing of the separator that covers the first layer of the first electrode member is released, the separator directed to the second electrode member is covered with the first layer of the first electrode member, and the first electrode member is laminated on the second electrode member together with the separator. The fixing of the separator may be released after the laminating step. The fixing of the separator may be released after or in parallel with the laminating step. On the other hand, for example, the fixing of the separator for permanent fixing does not need to be released.

The laminating step may include pressurizing the first electrode member, the separator, and the second electrode member in a case where the separator and the second electrode member are laminated. The above-described method can improve adhesiveness between the components.

A ratio of the thickness of the first layer of the first electrode member after laminating the first electrode member on the second electrode member to the thickness of the first layer of the first electrode member immediately before laminating the first electrode member on the second electrode member is preferably 0.8 to 1, more preferably 0.9 to 1, and still more preferably 0.95 to 1. As the above-described approaches 1, that is, as the deformation amount of the thickness of the first layer of the first electrode member in the laminating step decreases, deterioration of battery performance and short-circuit can be prevented. In the present disclosure, "the thickness of the first layer of the first electrode member immediately before laminating the first electrode member on the second electrode member" refers to the thickness of the first layer of the first electrode member immediately before the laminating step. In the present disclosure, "the thickness of the first layer of the first electrode member after laminating the first electrode member on the second electrode member" refers to the thickness of the first layer of the first electrode member after the laminating step.

A ratio of a thickness of the second layer of the second electrode member immediately before laminating the second electrode member on the separator to a thickness of the second layer of the second electrode member immediately before laminating the second electrode member on the separator is preferably 0.8 to 1, more preferably 0.9 to 1, and still more preferably 0.95 to 1. As the above-described approaches 1, that is, as a deformation amount of the thickness of the second layer of the second electrode member in the laminating step decreases, deterioration of battery performance and short-circuit can be prevented. In the present disclosure, "the thickness of the second layer of the second electrode member immediately before laminating the second electrode member on the separator" refers to the thickness of the second layer of the second electrode member immediately before the laminating step. In the present disclosure, "the thickness of the second layer of the second electrode member after laminating the second electrode member on the separator" refers to the thickness of the second layer of the second electrode member after the laminating step. In the present disclosure, "the thickness of the second layer" is represented by an arithmetic mean of the thicknesses measured at nine positions.

The laminating step may be released after or in parallel with the turning step. That is, by laminating the separator and the second electrode member while directing the separator to the second electrode member in the turning step, the structure may be formed.

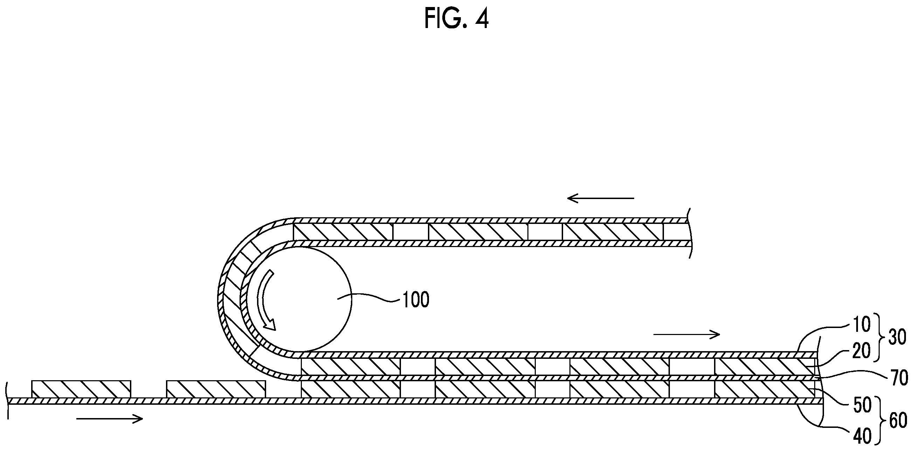

An example of the laminating step that is performed after the turning step will be described with reference to Fig. 4. Fig. 4 is a schematic diagram showing the turning step and the laminating step in the method of manufacturing a battery according to the embodiment. Note that the turning step and the laminating step are not limited to the embodiment shown in Fig. 4. As shown in Fig. 4, a roller 100 directs the separator 70 to the second electrode member 60 by turning the first electrode member 30 and the separator 70. The separator 70 is laminated on the second electrode member 60 while directing the separator 70 to the second electrode member 60 in the turning step. As a result, the structure that includes the first collector 10, the first layer 20 including the first active material, the separator 70, the second layer 50 including the second active material, and the second collector 40 in this order is formed.

### [Other Steps]

The method of manufacturing a battery may further include other steps. The other steps may be selected from steps applied to well-known methods of manufacturing a battery.

A temperature in the process from the preparation of each of the first electrode member and the second electrode member to the lamination of the separator and the second electrode member is preferably 25°C or lower, more preferably 20°C or lower, and still more preferably 15°C or lower. Further, the temperature is preferably 10°C or lower and more preferably 5°C or lower. The above-described method can prevent or reduce volatilization of the components in the first layer of the first electrode member and the second layer of the second electrode member, and can prevent a decrease in battery capacity. The lower limit of the temperature defined in the above-described method may be 0°C, 5°C, 10°C, or 15°C. The temperature defined in the above-described method may be room temperature. That is, the room temperature may be set to be in the above-described range. Regarding the room temperature, the temperature of the first layer of the first electrode member and the temperature of the second layer of the second electrode member can be controlled directly or indirectly. The temperature defined in the above-described method may be a temperature of the support that supports the first electrode member. Regarding the temperature of the support that supports the first electrode member, the temperature of the first layer of the first electrode member can be controlled directly or indirectly. The temperature defined in the above-described method may be a temperature of a support that supports the second electrode member. Regarding the temperature of the support that supports the second electrode member, the temperature of the second layer of the second electrode member can be controlled directly or indirectly. Examples of the support include the support described in "Fixing Step" above. The support that supports first electrode member may be the adsorption device described in "Fixing Step" above. "The process from the preparation of each of the first electrode member and the second electrode member to the lamination of the separator and the second electrode member" includes the first preparation step, the second preparation step, the coating step, the fixing step, the turning step, and the laminating step. On the other hand, the temperature in at least one of the steps may be set to be in the above-described range. For example, the temperature in the first preparation step may be set to be in the above-described range. For example, the temperature in the second preparation step may be set to be in the above-described range. The temperature in the coating step may be set to be in the above-described range. For example, the temperature in the fixing step may be set to be in the above-described range. For example, the temperature in the turning step may be set to be in the above-described range. For example, the temperature in the laminating step may be set to be in the above-described range.

The method of manufacturing a battery may include pressurizing the structure obtained in the laminating step. The above-described method can improve adhesiveness between the components. The temperature in the process of pressurizing the structure may be set to be in the above-described preferable temperature range of each of the steps.

### [Use]

The method of manufacturing a battery according to the embodiment of the present disclosure is applicable to methods of manufacturing various batteries including a collector, an active material, and a separator. Examples of a preferable use of the battery manufactured using the method of manufacturing a battery according to the embodiment of the present disclosure include a lithium ion secondary battery.

### Examples

Hereinafter, the present disclosure will be described in detail using Examples. The present disclosure is not limited to the following examples. Features shown below in Examples may be appropriately changed within a range not departing from the scope of the present disclosure.

### <Example 1>

### [First Preparation Step]

At room temperature of 25°C, a first composition was prepared according to the following procedure.
(1) By mixing 0.9 mol/L of a LiPF₆ solution with a mixture including ethylene carbonate, propylene carbonate, and diethyl carbonate and further mixing vinylene carbonate with the solution, an electrolytic solution X (115.7 g) was prepared.
(2) A conductive auxiliary agent (Ketjen Black 2 g) and a positive electrode active material (174 g of lithium iron phosphate) as a first active material were stirred using a mixing device ("AWATORI RENTARO", manufactured by Thinky Corporation) at 1500 revolutions per minute (rpm) for 30 seconds, a kneaded material Y (176 g)was prepared.
(3) The electrolytic solution X (64 g) was added to the kneaded material Y (176 g) and stirred using a mixing device ("AWATORI RENTARO", manufactured by Thinky Corporation) at 1500 rpm for 120 seconds to obtain a first composition. A volume ratio between a solid component and a liquid component in the first composition was 48:52.

As a first collector (specifically, a positive electrode collector), carbon-coated aluminum foil (thickness: 20 µm, Ra: 0.5 µm) was prepared. Ra represents an arithmetic average roughness of the surface of the first collector (specifically, a carbon layer that covers aluminum foil). The first collector was disposed on a cooling plate adjusted to 5°C. The first composition was supplied to the first collector cooled by the cooling plate to form a first electrode member including the first collector and the first layer including the first active material. The dimension of each of the components of the first electrode member is shown in Table 1.

### [Second Preparation Step]

At room temperature of 25°C, a second composition was prepared according to the following procedure.
(1) The electrolytic solution X was prepared using the above-described method.
(2) A conductive auxiliary agent (carbon black) and a negative electrode active material (graphite) as a second active material were weighed at a mass ratio of 2.7:63.4 such that the total amount was 159 g. The conductive auxiliary agent and the negative electrode active material were stirred using a mixing device ("AWATORI RENTARO", manufactured by Thinky Corporation) at 900 rpm for 18 seconds to prepare a kneaded material Z (159 g).
(3) The electrolytic solution X (64 g) was added to the kneaded material Z (159 g) and stirred using a mixing device ("AWATORI RENTARO", manufactured by Thinky Corporation) at 900 rpm for 30 seconds to obtain a second composition. A volume ratio between a solid component and a liquid component in the second composition was 52:48.

As a second collector (specifically, a negative electrode collector), copper foil (thickness: 10 µm, Ra: 0.55 µm) was prepared. Ra represents an arithmetic average roughness of the surface of the second collector. The second collector was disposed on a cooling plate adjusted to 5°C. The second composition was supplied to the second collector cooled by the cooling plate to form a second electrode member including the second collector and the second layer including the second active material. The dimension of each of the components of the second electrode member is shown in Table 1.

### [Coating Step and Fixing Step]

At room temperature of 25°C, the first layer of the first electrode member was covered with a separator (thickness: 20 µm). Next, four positions of an outer edge portion of the separator were fixed using four fixing tools on a side outside of an outer peripheral surface of the first layer. Each of the fixing tools was an electric gripper. In a plan view, four fixing tools included two sets each of which included two fixing tools facing each other in a machine direction of the first collector, and each of the fixing tools fixed the outer edge portion of the separator along a transverse direction of the first collector. The width of each of the fixing tools fixing the outer edge portion of the separator was 15 mm. An interval between the two fixing tools facing each other in the machine direction of the first collector was 212 mm. Regarding the two fixing tools adjacent to each other in the transverse direction of the first collector, the distance from the center of one fixing tool to the center of the other fixing tool was 146 mm. In a plan view, the center of the first electrode member matched with the center of the four fixing positions.

### [Turning Step and Laminating Step]

At room temperature of 25°C, the separator was directed to the second electrode member by turning the first electrode member and the separator by 180 degrees while maintaining the fixing of the separator. Next, the separator and the second electrode member were laminated. The obtained structure included the first collector, the first layer, the separator, the second layer, and the second collector in this order.

### [Evaluation]

Whether or not collapse of the active material-containing layer occurred in the turning step and the laminating step was checked by visual inspection and was evaluated based on the following standards. The evaluation results are shown in Table 1.
A: the collapse of the active material-containing layer did not occur.
B: the collapse of the active material-containing layer occurred.

### <Examples 2 and 3>

Whether or not the collapse occurred was evaluated using the same method as that of Example 1, except that the dimension of the electrode member was changed as shown in Table 1. The evaluation results are shown in Table 1.

### <Example 4>

Whether or not the collapse occurred was evaluated using the same method as that of Example 1, except that the outer edge portion of the separator was adsorbed to an adsorption device to fix the separator instead of the fixing tool. The evaluation results are shown in Table 1. In a plan view, the adsorption device continuously adsorbed the outer edge portion of the separator along the transverse direction of the first collector on the side outside of the outer peripheral surface of the first layer. The adsorption device was a vacuum adsorption device.

### <Comparative Example 1>

Whether or not the collapse occurred was evaluated using the same method as that of Example 1, except that the separator was not fixed. The evaluation results are shown in Table 1.

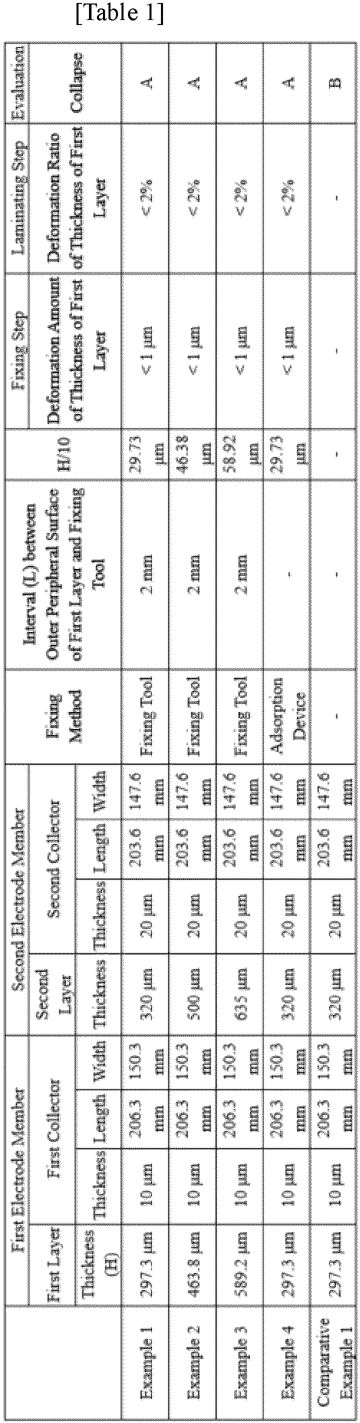

"Deformation Amount of Thickness of First Layer" in the fixing step shown in Table 1 was calculated by the following expression. Deformation Amount = |[Thickness of First Layer of First Electrode Member Immediately Before Fixing Separator] - [Thickness of First Layer of First Electrode Member Immediately After Fixing Separator]|

"Deformation Ratio of Thickness of First Layer" in the laminating step shown in Table 1 was calculated by the following expression. Deformation Ratio {([Thickness of First Layer before Laminating Step] - [Thickness of First Layer after Laminating Step]) - [Thickness of First Layer before Laminating Step]} × 100

According to Table 1, the collapse of the active material-containing layer occurred in Comparative Example 1 not including the fixing of the separator, whereas the collapse of the active material-containing layer did not occur in Examples 1 to 4 including the fixing of the separator.

The disclosure of Japanese Patent Application No. 2022-120966 filed on July 28, 2022 is incorporated herein in its entirety.

All publications, patent applications, and technical standards mentioned in this specification are herein incorporated by reference to the same extent as if each individual publication, patent application, or technical standard was specifically and individually indicated to be incorporated by reference.

## Claims

1. A method of manufacturing a battery, the method comprising:
preparing a first electrode member that includes a first collector and a first layer including a first active material;
preparing a second electrode member that includes a second collector and a second layer including a second active material;
covering the first layer of the first electrode member with a separator;
fixing the separator that covers the first layer of the first electrode member;
directing the separator to the second electrode member by turning the first electrode member and the separator while the separator that covers the first layer of the first electrode member is fixed; and
laminating the separator directed to the second electrode member and the second electrode member to form a structure including the first collector, the first layer, the separator, the second layer, and the second collector in this order.

2. The method of manufacturing a battery according to claim 1,
wherein the fixing of the separator includes fixing an outer edge portion of the separator on a side outside of an outer peripheral surface of the first layer of the first electrode member.

3. The method of manufacturing a battery according to claim 1 or 2,
wherein the fixing of the separator includes fixing an outer edge portion of the separator at two or more fixing positions.

4. The method of manufacturing a battery according to claim 3,
wherein in a plan view, a center of the first electrode member matches with a center of the two or more fixing positions.

5. The method of manufacturing a battery according to claim 1 or 2,
wherein the fixing of the separator includes adsorbing an outer edge portion of the separator to an adsorption device.

6. The method of manufacturing a battery according to claim 1 or 2,
wherein the fixing of the separator includes pressing an outer edge portion of the separator using a fixing tool.

7. The method of manufacturing a battery according to claim 6,
wherein in the fixing of the separator, an interval L between an outer peripheral surface of the first layer of the first electrode member and the fixing tool and a thickness H of the first layer of the first electrode member satisfy a relationship of L > (H/10).

8. The method of manufacturing a battery according to claim 1 or 2,
wherein in the fixing of the separator, a deformation amount of a thickness of the first layer of the first electrode member is 1/50 or less the thickness of the first layer of the first electrode member immediately before fixing the separator.

9. The method of manufacturing a battery according to claim 1 or 2,
wherein a temperature in the process from the preparation of each of the first electrode member and the second electrode member to the lamination of the separator and the second electrode member is 20°C or lower.

10. The method of manufacturing a battery according to claim 1 or 2,
wherein a ratio of a thickness of the first layer of the first electrode member after laminating the first electrode member on the second electrode member to a thickness of the first layer of the first electrode member immediately before laminating the first electrode member on the second electrode member is 0.9 to 1.

11. The method of manufacturing a battery according to claim 1 or 2,
wherein the first electrode member is a positive electrode member, and the second electrode member is a negative electrode member.

12. The method of manufacturing a battery according to claim 1 or 2,
wherein the first electrode member is a negative electrode member, and the second electrode member is a positive electrode member.
